# EUROPÄISCHE PATENTSCHRIFT

(11) **EP 1 383 216 B1**
(45) Veröffentlichungstag und Bekanntmachung des Hinweises auf die Patenterteilung: **27.02.2008**
(21) Anmeldenummer: 03014992.6
(22) Anmeldetag: 02.07.2003
(51) Int. Cl.: H02G 3/38

(54) **Unterflurinstallation**
Under floor installation
Installation souterraine

(30) Priorität: 17.07.2002 DE 20210774 U
(43) Veröffentlichungstag der Anmeldung: 21.01.2004
(73) Patentinhaber: Tehalit GmbH, 67716 Heltersberg (DE)
(72) Erfinder: Schnurr, Richard, 66957 Vinningen (DE); Kauf, Peter, 66482 Zweibrücken (DE); Klöckner, Olivier, 66976 Rodalben (DE); Michel, Dieter, 66459 Kirkel (DE)
(74) Vertreter: Patentanwälte Möll und Bitterich

(56) Entgegenhaltungen:
- EP-A- 0 529 740
- DE-A- 3 734 733
- DE-A- 19 534 458
- DE-U- 20 102 443

## Beschreibung

Die Erfindung betrifft elektrische und gegebenenfalls heizungstechnische Unterflurinstallationen gemäß dem Oberbegriff des Anspruchs 1, bestimmt für Gebäude mit Rohboden und Rohwand sowie mit Bodendämmung, Estrich, Bodenbelag und/oder Putz, insbesondere für Neubauten von Wohngebäuden.

Beim Neubau von Wohn- und Bürogebäuden werden zunächst die Wände und Decken bzw. Böden erstellt. Anschließend folgt der Innenausbau. Dazu gehören die Installationsarbeiten für Heizung, Wasser, Elektro usw. Ein Teil der Versorgungsleitungen wird auf dem Rohboden verlegt, bevor Bodendämmung und Estrich eingebracht werden. In die Wände werden Schlitze vorgesehen, die die Leitungen aufnehmen, und Gerätedosen gesetzt. Anschließend werden die Schlitze geschlossen und der Wandputz aufgebracht. Die Kabel und Leitungen enden in den Gerätedosen.

Speziell für Bürogebäude mit Doppelboden gibt es Unterflur-Installationssysteme, die im Doppelboden verlegt werden. An bestimmten Stellen werden in den Boden Anschlussboxen eingesetzt, die mit einer trittfesten Klappe verschlossen werden können. Hinter der Klappe sind Steckdosen, Sicherungen usw. geschützt untergebracht. Dieses Installationssystem erlaubt es, die Anschlussboxen innerhalb des Fußbodenrasters beliebig zu versetzen, weil die Kabel und Leitungen im Zwischenboden völlig frei verlegt sind. Für den klassischen Bodenaufbau mit Estrich sind diese Unterflursysteme jedoch nicht geeignet.

Auch für den Bodenaufbau mit Estrich existieren Unterflursysteme. Da hier die Anschlusspunkte mitten im Raum angeordnet sind, sind diese Systeme für den Wohnbereich ungeeignet.

In der DE 201 02 443 U1 wird eine Führungsvorrichtung für ein in einer Betondecke verlegtes Rohr beschrieben. Die Führungsvorrichtung ist versehen mit einem Gehäuse, das eine Oberseitenwand, eine an diese angrenzende Seitenwand und eine zumindest teilweise offene Unterseite aufweist, wobei das Gehäuse mit seiner Unterseite im Wesentlichen in Höhe der Unterseite der Betondecke liegend positionierbar ist sowie einer Durchbrechung in der Seitenwand des Gehäuses sowie Hineinführen des Endes des mindestens einen in der Betondecke verlegten Rohres in das Gehäuse und mindestens einem von der Oberseitenwand des Gehäuses abstehenden Rohrdurchführungsvorsprung zur Aufnahme und Durchführung des Rohres in Richtung auf die Oberseite der Betondecke. Nachteilig bei dieser Führungsvorrichtung ist, dass der Verlauf der Kabel und Leitungen bereits durch die Form der Führungsvorrichtung vorgegeben ist und keine Variabilität hinsichtlich der Anschlüsse und Verlegung der Leitungen besteht.

Der vorliegenden Erfindung liegt die Aufgabe zugrunde, ein Unterflurinstallationssystem für Gebäude mit klassischem Bodenaufbau anzugeben, welches einen hohen Grad an Vorfabrikation und Montageflexibilität besitzt und vor allem die klassische Aufeinanderfolge der Gewerke am Bau beizubehalten gestattet.

Diese Aufgabe wird gelöst durch eine Unterflurinstallation mit den Merkmalen des Anspruchs 1.

Wesentlicher Vorteil der Erfindung ist die Möglichkeit, in großem Umfang fabrikmäßig vorgefertigte Komponenten verwenden zu können, so dass die Installation nicht nur von ausgebildetem Fachpersonal vorgenommen werden kann. Die eingeübte Abfolge der Gewerke wird nicht geändert. Die Höhe des Bodenaufbaus ist innerhalb der konstruktiven Grenzen frei wählbar. Außerdem sind die Installationskomponenten einfach und preiswert, so dass die Kosten auch dann noch im Rahmen bleiben, wenn im Hinblick auf eine hohe Versorgungsdichte und Flexibilität von vornherein eine größere Zahl von Anschlusseinheiten vorgesehen wird.

Ein weiterer Vorteil ist, dass die Anschlusspunkte am Übergang vom Boden zur Wand liegen, so dass die Weiterführung der Kabel und Leitungen durch Sockelleistenkanäle möglich ist. Dadurch bleibt das in Wohn- und Bürogebäuden gewohnte Raumbild erhalten.

Gemäß einer Weiterbildung der Erfindung überdeckt die Haube die komplette Anschlussplatte.

Eine Ausgestaltung der Erfindung sieht vor, dass die Anschlussplatte L-förmig ist mit einem wandseitigen und einem bodenseitigen Schenkel. Eine solche Konstruktion ist sehr einfach und preiswert, bietet eine Vielzahl von Befestigungsmöglichkeiten und ermöglicht variable Anschlüsse.

Gemäß einer Weiterbildung der Erfindung sind an der Anschlussplatte Zugentlastungen für die Enden der Leerrohre und/oder der Kabel und Leitungen vorgesehen.

Vorzugsweise befinden sich die Zugentlastungen für die Leerrohre auf dem bodenseitigen Schenkel. Die Leerrohre werden in diesem Fall nicht im 90°-Winkel an der Wand hochgezogen, so dass der Platzbedarf minimal wird.

Gemäß einer Ausgestaltung der Erfindung besitzt die Haube Durchführungen für Leerrohre und/oder Kabel und Leitungen. Sind diese Durchführungen vorbereitet, so kann der Installateur die entsprechenden Ausschnitte in passender Größe leicht selbst herstellen.

Vorteilhafterweise sind die Enden der Kabel und Leitungen anschlussfertig konfektioniert. Dadurch werden die Anschlussarbeiten erheblich vereinfacht und beschleunigt.

Gemäß einer Weiterbildung der Erfindung ist ein Aufputz-Kanal vorgesehen mit einer bodenseitigen, zu den Leitungsenden passenden Öffnung. Dieser Kanal deckt zunächst die Öffnung im Boden ab, durch die die Enden der Kabel und Leitungen zugänglich sind. Außerdem ermöglicht er die Verteilung der Kabel und Leitungen zu den vom Verbraucher gewünschten Anschlusspunkten.

Gegebenenfalls kann auch eine Aufputz-Gerätebox mit einer bodenseitigen, zu den Leitungsenden passenden Öffnung vorgesehen sein. Diese Gerätebox kann elektrische Installationsgeräte aufnehmen, beispielsweise eine oder mehrere Steckdosen.

Anhand der Zeichnung soll die Erfindung in Form eines Ausführungsbeispiels näher erläutert werden. Es zeigen jeweils rein schematisch
- Fig. 1: eine Anschlussplatte, montiert auf Rohboden und Rohwand,
- Fig. 2: eine alternative Anschlussplatte,
- Fig. 3: die Anschlussplatte der Fig. 1, abgedeckt mit einer Haube,
- Fig. 4: eine Haube mit vorbereiteten Durchführungen für Leerrohre und/oder Kabel und Leitungen,
- Fig. 5: die Anordnung der Fig. 3 nach Anbringen einer Bodendämmschicht,
- Fig. 6: die Anordnung der Fig. 5 nach Anbringen einer Estrichschicht,
- Fig. 7: die Anordnung der Fig. 6 nach Anbringen einer Putzschicht,
- Fig. 8: die Anordnung der Fig. 7 nach Anbringen eines Bodenbelags,
- Fig. 9: die Anordnung der Fig. 8 nach niveaugleichem Abschneiden des überstehenden Teils der Haube,
- Fig. 10: die Anordnung der Fig. 9 nach Aufsetzen eines Sockelleistenkanals mit Aufputz-Gerätebox und
- Fig. 11: einen Schnitt durch die Anordnung der Fig. 10.

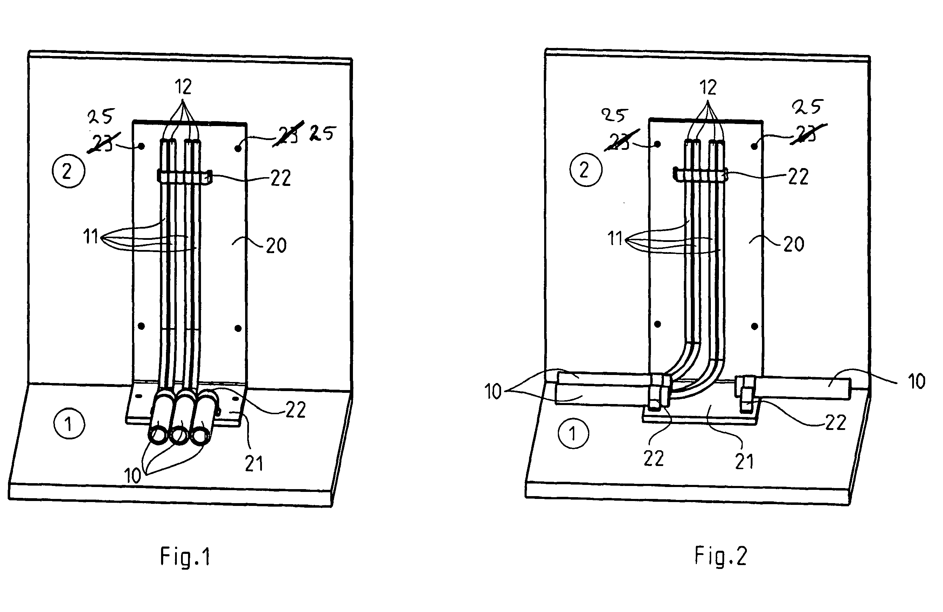

Die Fig. 1 bis 10 zeigen rein schematisch und in Schrägansicht eine elektrische und gegebenenfalls heizungstechnische Unterflurinstallation für Gebäude, insbesondere für Neubauten.

Fig. 1 zeigt einen Ausschnitt aus einem Gebäude. In einer Ecke, gebildet durch einen Rohboden 1 und eine Rohwand 2, ist eine L-förmige Anschlussplatte 20, 21 montiert. Auf dem bodenseitigen Schenkel 21 der Anschlussplatte sind mit Hilfe von Zugentlastungen 22 die Enden von Leerrohren 10 fixiert. In den Leerrohren 10 sind Kabel bzw. Leitungen 11 geführt. Deren Enden 12 sind mit Hilfe von weiteren Zugentlastungen 22 am wandseitigen Schenkel 20 der Anschlussplatte festgelegt. Die Anschlussplatte 20, 21 ist mit einer Reihe von Bohrungen 25 versehen, mit deren Hilfe sie an Boden 1 oder Wand 2 fixiert werden kann.

Fig. 2 zeigt eine alternative Anschlussplatte. Hier sind die die Enden der Leerrohre 10 haltenden Zugentlastungen 22 seitlich angebracht. Im übrigen entspricht diese Anschlussplatte der der Fig. 1.

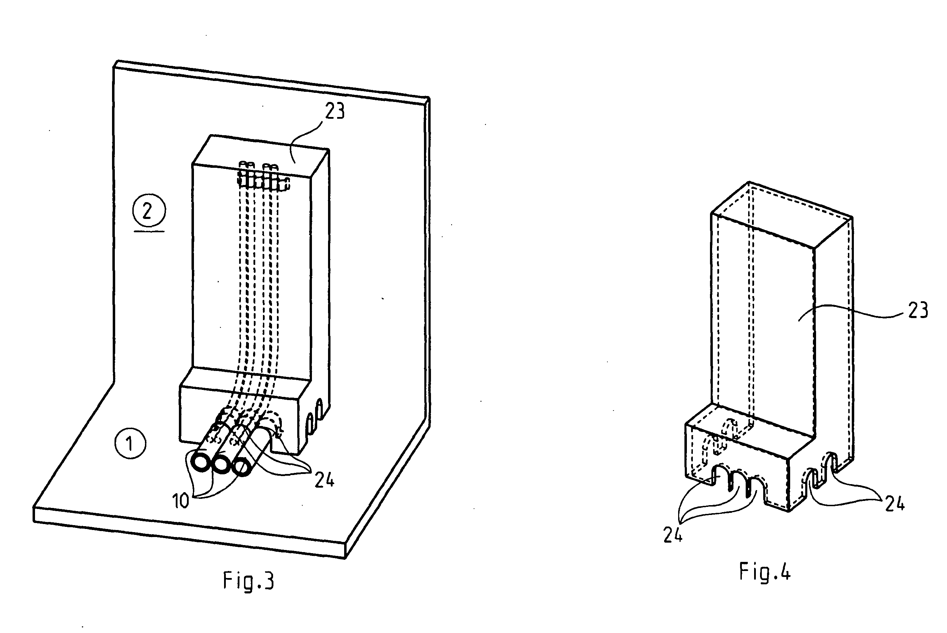

Fig. 3 zeigt die Anschlussplatte 20, 21 mit aufgesetzter Haube. Die Haube 23 ist so ausgebildet, dass weder Estrich noch Putz eindringen können.

Fig. 4 zeigt eine Ausführungsform einer solchen Haube 23. Man erkennt an der Unterseite vorbereitete Öffnungen 24 für die Leerrohre 10 oder Kabel und Leitungen 11.

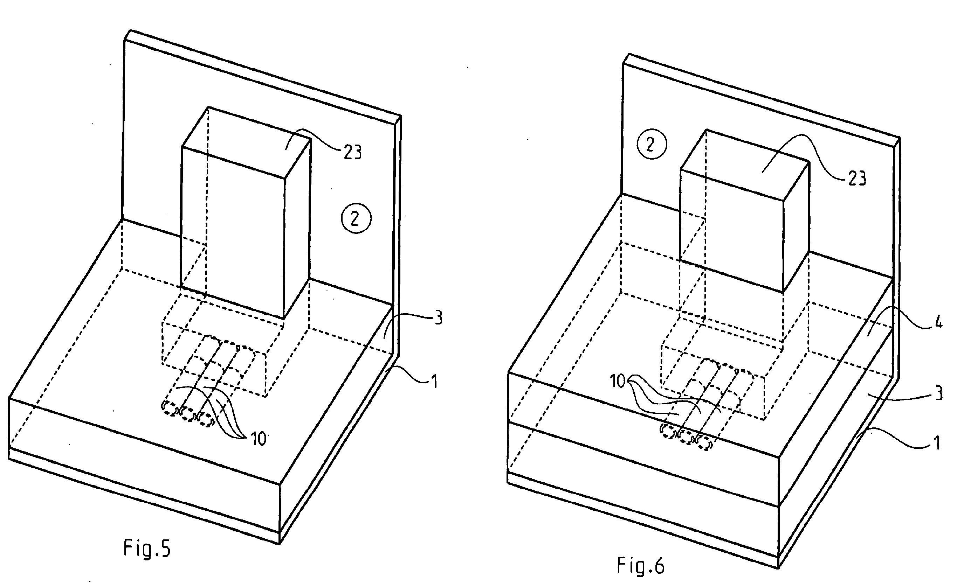

Fig. 5 zeigt die Anordnung der Fig. 3, nachdem eine Bodendämmschicht 3 angebracht wurde. Die Leerrohre 10 sowie der bodenseitige Schenkel der Haube 23 sind bedeckt.

Fig. 6 zeigt die Anordnung der Fig. 5 nach Anbringen einer Estrichschicht 4.

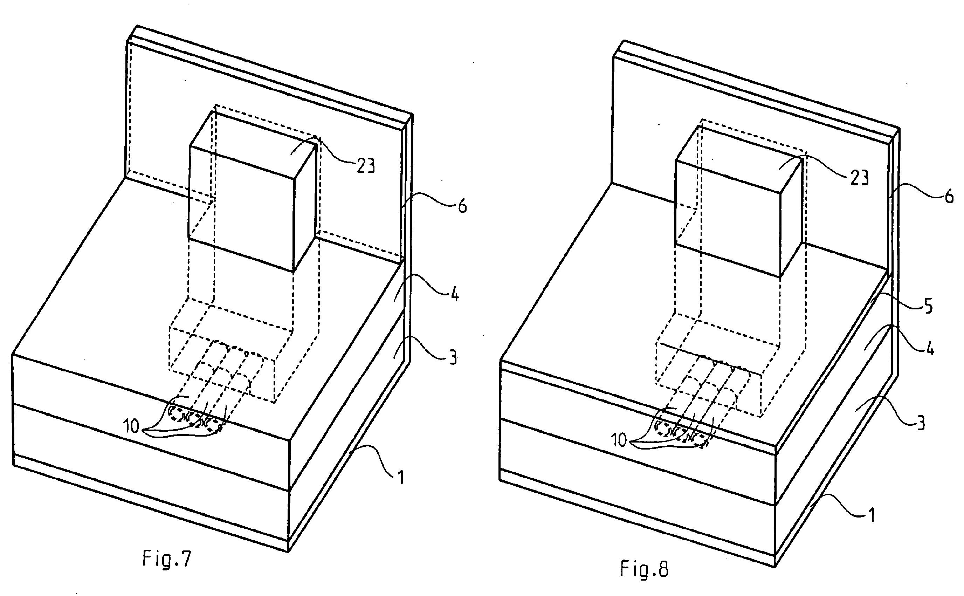

Fig. 7 zeigt die Anordnung der Fig. 6 nach Anbringen einer Putzschicht 6 auf die Rohwand 2. Die Haube 23 ist noch immer zugänglich.

Fig. 8 zeigt die Anordnung der Fig. 7 nach Aufbringen eines Bodenbelags 5 auf den Estrich 4. Die Haube 23 ist noch immer zugänglich.

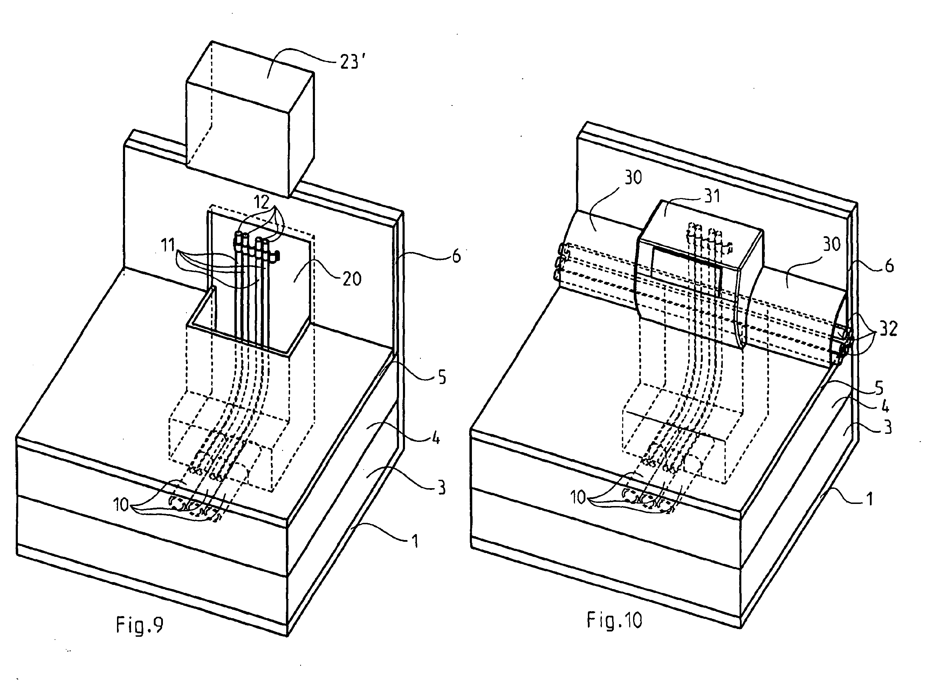

Fig. 9 zeigt die Anordnung der Fig. 8, nachdem das freiliegende Teil 23' der Haube 23 niveaugleich mit dem Bodenbelag 5 bzw. der Putzschicht 6 abgeschnitten wurde. Im Boden ist eine Öffnung entstanden, durch die die Enden 12 der Kabel und Leitungen 11 für weiterführende Installationsarbeiten gut zugänglich sind. Sind die Enden 12 der Kabel und Leitungen 11 anschlussfertig konfektioniert, beispielsweise mit steckbaren Kupplungen versehen, können die weiterführenden Installationsarbeiten auch von angelernten Personen ausgeführt werden.

Fig. 10 zeigt die Endsituation. Auf die durch das Abschneiden der Haube 23 entstandene Bodenöffnung sind ein Sockelleistenkanal 30 sowie eine Aufputz-Gerätebox 31 aufgesetzt. Kanal 30 und Box 31 besitzen bodenseitige Öffnungen, durch die der Zugang zu den Kabeln und Leitungen 11 möglich ist. Im Sockelleistenkanal 30 liegen weitere Kabel und Leitungen 32, die zu weiteren Anschlusseinheiten führen.

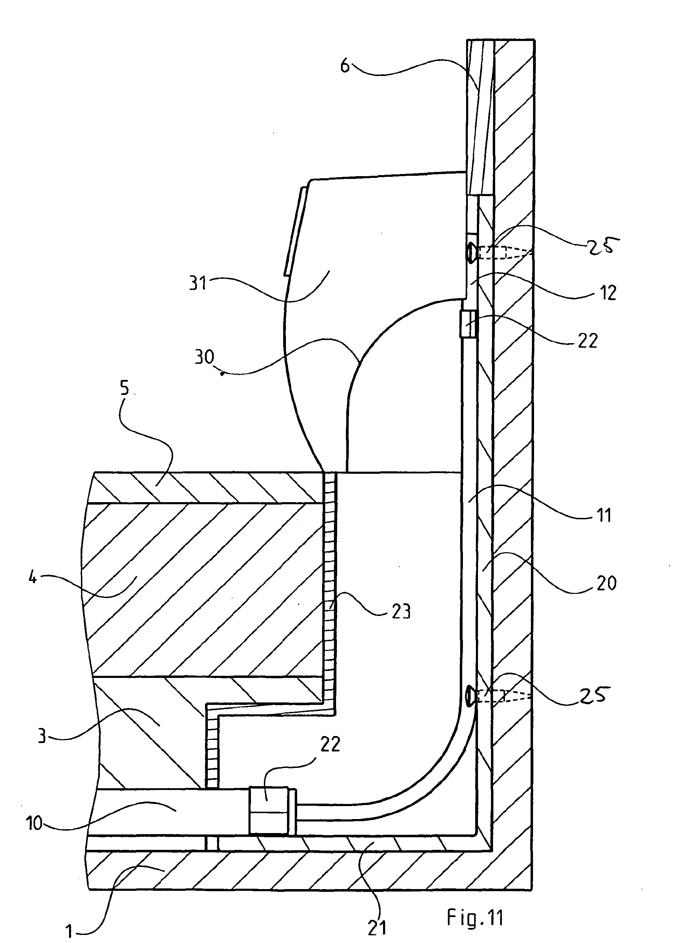

Fig. 11 zeigt in vergrößerter Darstellung einen Längsschnitt durch die Anordnung der Fig. 10. Man erkennt die auf Rohboden 1 und Rohwand 2 montierte L-förmige Anschlussplatte, auf deren bodenseitigem Schenkel 21 mit Hilfe der Zugentlastungen 22 die Enden der Leerrohre 10 und an deren wandseitigem Schenkel 20 mit Hilfe von weiteren Zugentlastungen 22 die Enden 12 der Kabel und Leitungen 11 fixiert sind. Die Kabel und Leitungen 11 sind in den Leerrohren 10 geführt.

Auf die Anschlussplatte 20, 21 aufgesetzt erkennt man die Haube 23, deren über das Niveau des Bodenaufbaus, bestehend aus Bodendämmschicht 3, Estrichschicht 4 und Bodenbelag 5 hinausstehendes Ende niveaugleich abgeschnitten wurde. Die Schnittführung ist auch niveaugleich mit der auf der Rohwand aufgetragenen Putzschicht 6 geführt.

Des weiteren erkennt man im Querschnitt die Aufputz-Gerätebox 31 mit sich daran anschließendem Sockelleistenkanal 30.

Es versteht sich, dass anstelle von oder auch zusätzlich zu den Leerrohren 10 und Kabeln und Leitungen 11 auch flüssigkeitsführende Rohre, beispielsweise Heizungsrohre, verlegt werden können. Auch Rohre können später in einem Sockelleistenkanal weitergeführt werden.

## Patentansprüche

1. Elektrische und gegebenenfalls heizungstechnische Unterflurinstallation für Gebäude mit Rohboden (1) und Rohwand (2) sowie mit Bodendämmung (3), Estrich (4), Bodenbelag (5) und/oder Putz (6), insbesondere für Neubauten von Wohngebäuden, im wesentlichen umfassend
- auf dem Rohboden (1) gegebenenfalls in Leerrohren (10) zu verlegende elektrische Kabel oder Leitungen (11),
- die Enden (12) der Kabel und Leitungen (11) sind über dem Niveau des endgültigen Bodenaufbaus (3, 4, 5) befestigt,
**gekennzeichnet durch** die Merkmale:
- eine Anschlussplatte (20, 21) zum Festlegen der Enden (12) der Kabel oder Leitungen (11),
- die Anschlussplatte (20, 21) besitzt
- Einrichtungen (25) zur Befestigung an der Rohwand (2) bzw. am Rohboden (1)
- und Einrichtungen (22) zum Befestigen der Kabel oder Leitungen (11) bzw. der Leerrohre (10),
- eine Haube (23), die Anschlussplatte (20), Leerrohre (10) und/oder Kabel- und Leitungsenden (12) überdeckt,
- die Haube (23) lässt sich niveaugleich mit dem endgültigen Bodenaufbau (3, 4, 5) abschneiden.

2. Unterflurinstallation nach Anspruch 1, **gekennzeichnet durch** das Merkmal:
- die Haube (23) deckt die Anschlussplatte (20, 21) komplett ab.

3. Unterflurinstallation nach Anspruch 1 oder 2, **gekennzeichnet durch** das Merkmal:
- die Anschlussplatte (20, 21) ist L-förmig mit einem wandseitigen Schenkel (20) und einem bodenseitigen Schenkel (21).

4. Unterflurinstallation nach Anspruch 1, 2 oder 3, **gekennzeichnet durch** das Merkmal:
- die Anschlussplatte (20, 21) besitzt Zugentlastungen (22) für die Enden der Leerrohre (10) und/oder der Kabel und Leitungen (11).

5. Unterflurinstallation nach Anspruch 4, **gekennzeichnet durch** das Merkmal:
- die Zugentlastungen (22) für die Leerrohre (10) befinden sich auf dem bodenseitigen Schenkel (21).

6. Unterflurinstallation nach einem der Ansprüche 1 bis 5, **gekennzeichnet durch** das Merkmal:
- die Haube (23) besitzt Durchführungen (24) für Leerrohre (10) und/oder Kabel und Leitungen (11).

7. Unterflurinstallation nach einem der Ansprüche 1 bis 6, **gekennzeichnet durch** das Merkmal:
- die Enden (12) der Kabel und Leitungen (11) sind anschlussfertig konfektioniert.

8. Unterflurinstallation nach einem der Ansprüche 1 bis 7, **gekennzeichnet durch** das Merkmal:
- es ist ein Aufputz-Kanal (30) vorgesehen mit einer bodenseitigen, zu den Leitungsenden (12) passenden Öffnung.

9. Unterflurinstallation nach einem der Ansprüche 1 bis 8, **gekennzeichnet durch** das Merkmal:
- es ist eine Aufputz-Gerätebox (31) vorgesehen mit einer bodenseitigen, zu den Leitungsenden (12) passenden Öffnung.

## Claims

1. Electrical and optionally heating underfloor installation for buildings with a raw floor (1) and raw wall (2) as well as with floor insulation (3), a lime floor (4), floor covering (5) and/or plaster (6), in particular for new constructions of residential buildings, essentially comprising
- electrical cables or lines (11) to be laid on the raw floor (1), optionally in empty conduits (10),
- the ends (12) of the cables and lines (11) are fastened above the level of the final floor construction (3, 4, 5),
**characterised by** the features:
- a connection plate (20, 21) for fixing the ends (12) of the cables or lines (11),
- the connection plate (20, 21) has
- devices (25) for fastening to the raw wall (2) or to the raw floor (1),
- and devices (22) for fastening the cables or lines (11) or the empty conduits (10),
- a hood (23) which covers the connection plate (20), empty conduits (10) and/or cable and line ends (12),
- the hood (23) can be cut off level with the final floor construction (3, 4, 5).

2. Underfloor installation according to Claim 1, **characterised by** the feature:
- the hood (23) completely covers the connection plate (20, 21).

3. Underfloor installation according to Claim 1 or 2, **characterised by** the feature:
- the connection plate (20, 21) is L-shaped with a limb (20) on the wall side and a limb (21) on the floor side.

4. Underfloor installation according to Claim 1, 2 or 3, **characterised by** the feature:
- the connection plate (20, 21) has strain reliefs (22) for the ends of the empty conduits (10) and/or of the cables and lines (11).

5. Underfloor installation according to Claim 4, **characterised by** the feature:
- the strain reliefs (22) for the empty conduits (10) are located on the limb (21) which is on the floor side.

6. Underfloor installation according to any one of Claims 1 to 5, **characterised by** the feature:
- the hood (23) has lead-throughs (24) for empty conduits (10) and/or cables and lines (11).

7. Underfloor installation according to any one of Claims 1 to 6, **characterised by** the feature:
- the ends (12) of the cables and lines (11) are prepared ready for connection.

8. Underfloor installation according to any one of Claims 1 to 7, **characterised by** the feature:
- a surface-mounted duct (30) with an opening on the floor side which matches the line ends (12) is provided.

9. Underfloor installation according to any one of Claims 1 to 8, **characterised by** the feature:
- a surface-mounted appliance box (31) with an opening on the floor side which matches the line ends (12) is provided.

## Revendications

1. Installation souterraine électrique et le cas échéant de chauffage pour des bâtiments avec plancher brut (1) et mur brut (2) ainsi qu'avec isolation de plancher (3), chape (4), revêtement de sol (5) et/ou enduit (6), en particulier pour les constructions neuves de bâtiments d'habitation, comprenant essentiellement
- des câbles ou lignes électriques (11) à poser le cas échéant dans des gaines (10) sur le plancher brut (1),
- les extrémités (12) des câbles ou lignes (11) sont fixées au-dessus du niveau de la structure de plancher (3, 4, 5) définitive,
**caractérisée par** les caractéristiques suivantes :
- une plaque de raccordement (20, 21) pour attacher les extrémités (12) des câbles ou lignes (11),
- la plaque de raccordement (20, 21) possède
- des équipements (25) pour la fixation au mur brut (2) ou sur le plancher brut (1)
- et des équipements (22) pour fixer les câbles ou lignes (11), respectivement les gaines (10),
- un capot (23) qui recouvre la plaque de raccordement (20), les gaines (10) et/ou les extrémités de câbles et lignes (12),
- le capot (23) peut être coupé de niveau avec la structure de plancher (3, 4, 5) définitive.

2. Installation souterraine selon la revendication 1, **caractérisée par** la caractéristique suivante :
- le capot (23) recouvre complètement la plaque de raccordement (20, 21).

3. Installation souterraine selon la revendication 1 ou 2, **caractérisée par** la caractéristique suivante :
- la plaque de raccordement (20, 21) est en forme de L avec une branche côté mur (20) et une branche côté plancher (21).

4. Installation souterraine selon la revendication 1, 2 ou 3, **caractérisée par** la caractéristique suivante :
- la plaque de raccordement (20, 21) possède des dispositifs de décharge de traction (22) pour les extrémités des gaines (10) et/ou des câbles et lignes (11).

5. Installation souterraine selon la revendication 4, **caractérisée par** la caractéristique suivante :
- les dispositifs de décharge de traction (22) pour les gaines (10) se trouvent sur la branche côté plancher (21).

6. Installation souterraine selon l'une des revendications 1 à 5, **caractérisée par** la caractéristique suivante :
- le capot (23) possède des traversées (24) pour des gaines (10) et/ou des câbles et lignes (11).

7. Installation souterraine selon l'une des revendications 1 à 6, **caractérisée par** la caractéristique suivante :
- les extrémités (12) des câbles et lignes (11) sont confectionnées prêtes à raccorder.

8. Installation souterraine selon l'une des revendications 1 à 7, **caractérisée par** la caractéristique suivante :
- il est prévu un conduit en saillie (30) avec une ouverture côté plancher adaptée aux extrémités de lignes (12).

9. Installation souterraine selon l'une des revendications 1 à 8, **caractérisée par** la caractéristique suivante :
- il est prévu un boîtier d'appareillage en saillie (31) avec une ouverture côté plancher adaptée aux extrémités de lignes (12).
